# FASCICULE DE BREVET EUROPEEN

(11) **EP 3 505 439 B1**
(45) Date de publication et mention de la délivrance du brevet: **15.04.2020**
(21) Numéro de dépôt: 18214912.0
(22) Date de dépôt: 20.12.2018
(51) Int. Cl.: B64C 3/32, B64D 27/18, B64D 27/26

(54) **ENSEMBLE POUR AERONEF COMPRENANT UNE STRUCTURE PRIMAIRE DE MAT D'ACCROCHAGE FIXEE A UN CAISSON DE VOILURE PAR DES ATTACHES PRESENTANT UN ENCOMBREMENT REDUIT DANS LA ZONE DE BORD D'ATTAQUE**
EINHEIT FÜR EIN LUFTFAHRZEUG, DIE EINE PRIMÄRSTRUKTUR EINES AUFHÄNGUNGSMASTS UMFASST, DIE AN EINEM FLÜGELKASTEN DURCH BEFESTIGUNGSELEMENTE BEFESTIGT IST UND IM VORDERKANTENBEREICH EIN REDUZIERTES VOLUMEN AUFWEIST
ASSEMBLY FOR AIRCRAFT COMPRISING A MOUNTING STRUT PRIMARY STRUCTURE ATTACHED TO A WING BOX BY COMPACT FASTENERS IN THE LEADING EDGE AREA

(30) Priorité: 29.12.2017 FR 1763355
(43) Date de publication de la demande: 03.07.2019
(73) Titulaire: AIRBUS OPERATIONS (SAS), 31060 Toulouse (FR)
(72) Inventeur: PAUTIS, Olivier, 31330 Merville (FR); COLMAGRO, Jérôme, 31500 Toulouse (FR)
(74) Mandataire: Brevalex

(56) Documents cités:
- WO-A1-2007/012667
- FR-A1- 2 873 985
- FR-A1- 2 887 522

## Description

### DOMAINE TECHNIQUE

La présente invention se rapporte au domaine des aéronefs, et en particulier aux ensembles comprenant une aile d'aéronef ainsi qu'un mât d'accrochage de moteur fixé sous cette aile. L'invention concerne de préférence de tels ensembles destinés à supporter des moteurs de grands diamètres, à double flux. Des exemples de ce type d'ensemble sont par exemple divulgués dans les documents FR 2 887 522 et WO 2007/012667.

L'invention s'applique en particulier aux avions commerciaux.

### ETAT DE LA TECHNIQUE ANTERIEURE

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mât d'accrochage. Les mâts d'accrochage habituellement employés présentent une structure primaire, également dite structure rigide, souvent réalisée sous forme d'un caisson, c'est-à-dire réalisée par l'assemblage de longerons inférieur et supérieur raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de l'aile. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment ceux liés aux cas de défaillances tels que la perte de pâles (FBO, de l'anglais « *Fan Blade Out* »), effacement du train avant, atterrissage dynamique, etc.

Dans les mâts d'accrochage connus de l'art antérieur tel que dans le document FR 2 887 522, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé. Pour les moteurs à double flux tels que les turboréacteurs, l'important taux de dilution recherché conduit à obtenir un encombrement particulièrement élevé, puisqu'une augmentation du taux de dilution engendre inéluctablement une hausse du diamètre du moteur, et plus particulièrement une hausse du diamètre de son carter de soufflante.

Par conséquent, avec une garde au sol qui est déterminée de manière à rester acceptable du point de vue sécuritaire, l'espace restant entre l'aile et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure, la structure primaire et les attaches reliant ces deux éléments. En effet, ces derniers doivent présenter des dimensions suffisantes pour apporter une résistance mécanique capable de supporter le passage des efforts du moteur vers l'aile, avec une faible déformée sous contrainte dans le but de ne pas dégrader les performances aérodynamiques du système propulsif.

Dans l'art antérieur, de multiples solutions ont été proposées pour rapprocher le moteur au plus près de l'élément de voilure auquel il est suspendu, et ce dans le but de conserver la garde au sol requise malgré l'augmentation des dimensions du moteur. Notamment, il est possible d'implanter au moins en partie certaines attaches dans une zone de bord d'attaque de l'aile. Cependant, les efforts importants à supporter par ces attaches conduisent à dimensionner celles-ci de manière conséquente, notamment selon la direction longitudinale, laissant ainsi une place restreinte aux systèmes et équipements habituellement logés dans la zone de bord d'attaque.

Il existe par conséquent un besoin d'optimisation des conceptions existantes, dans le but de réduire l'encombrement des attaches reliant le caisson de voilure au caisson de mât.

### EXPOSÉ DE L'INVENTION

Pour répondre à ce besoin, l'invention a pour objet un ensemble pour aéronef comprenant :
- une aile d'aéronef comprenant un caisson de voilure formé en partie à l'aide d'un longeron avant de voilure, d'une peau supérieure d'extrados et d'une peau inférieure d'intrados ;
- un mât d'accrochage de moteur agencé sous l'aile, le mât comprenant une structure primaire en forme de caisson de mât présentant un longeron supérieur s'étendant au moins en partie sous le caisson de voilure, et
- des moyens de fixation de la structure primaire du mât d'accrochage sur le caisson de voilure.

Selon l'invention, lesdits moyens de fixation comprennent deux attaches avant latérales, chacune de ces attaches comportant :
- une première portion de raccord fixée sur le longeron avant de voilure à l'aide de premiers éléments de fixation ;
- une seconde portion de raccord solidaire de la structure primaire du mât d'accrochage ;
- au moins un organe de fixation articulé sur chacune des première et seconde portions de raccord selon des axes d'articulation sensiblement orthogonaux à un plan du longeron avant de voilure.

En outre, les premières portions de raccord des deux attaches avant latérales sont réalisées d'un seul tenant au sein d'une ferrure unique de voilure s'étendant sur sensiblement toute la hauteur du longeron avant de voilure, la ferrure unique de voilure comportant également une portion supérieure de ferrure ainsi qu'une portion inférieure de ferrure reliant chacune les deux premières portions de raccord, ladite portion supérieure de ferrure étant fixée par des seconds éléments de fixation au longeron avant de voilure ainsi qu'à la peau supérieure d'extrados, et la portion inférieure de ferrure étant fixée par des troisièmes éléments de fixation au longeron avant de voilure ainsi qu'à la peau inférieure d'intrados.

Grâce à l'agencement proposé, la ferrure unique de voilure peut présenter un encombrement réduit dans la direction longitudinale, tout en conférant une forte capacité de transfert d'efforts, en particulier pour la reprise du moment de torsion selon cette même direction. En effet, cela s'explique par le fait que les efforts transitant par les deux attaches avant latérales peuvent se rejoindre au sein de la ferrure unique de voilure, et circuler le long d'une ligne fictive fermée longeant les deux premières portions de raccord ainsi que les portions inférieure et supérieure de ferrure. De plus, comme la ferrure unique de voilure s'étend sur sensiblement toute la hauteur du longeron avant de voilure, les éléments de fixation de cette ferrure peuvent être répartis sur une large surface du longeron avant ainsi que dans les peaux d'intrados et d'extrados. De ce fait, les chargements au niveau de chaque élément de fixation sont réduits, ce qui contribue également à diminuer l'encombrement de la ferrure unique de voilure selon la direction longitudinale.

En outre, le fait de limiter l'épaisseur de la ferrure unique de voilure selon cette direction longitudinale permet de réduire le déport d'introduction d'efforts dans le longeron avant du caisson de voilure. Cela contribue à pouvoir réduire encore davantage l'épaisseur de cette ferrure, puisque celle-ci ne nécessite plus de dimensionnement spécifique pour résister aux effets dits de porte-à-faux, susceptibles d'introduire un moment de flexion dans la ferrure et dans le longeron avant de voilure.

L'ensemble de ces sources de réduction d'encombrement permet avantageusement de ménager un volume conséquent à l'avant des attaches avant latérales, pour l'implantation de systèmes et d'équipements conventionnels dans la zone de bord d'attaque de l'aile.

L'invention prévoit de préférence au moins l'une des caractéristiques optionnelles suivantes, prises isolément ou en combinaison.

Ladite ferrure unique de voilure définit un ajour autour duquel sont agencées les deux premières portions de raccord ainsi que les portions inférieure et supérieure de ferrure.

Ladite ferrure unique de voilure présente une forme générale trapézoïdale, dont la grande base est agencée vers le haut.

Les deux secondes portions de raccord sont réalisées d'un seul tenant au sein d'une nervure transversale intérieure de renfort du caisson de mât, les deux secondes portions de raccord faisant saillie extérieurement de ce caisson de mât et pénétrant de préférence en partie dans une zone de bord d'attaque de l'aile.

Ledit au moins un organe de fixation est formé par au moins une manille, s'étendant de préférence sensiblement parallèlement à sa première portion de raccord associée.

Lesdits moyens de fixation comprennent également une attache avant centrale configurée pour assurer la reprise des efforts s'exerçant selon une direction transversale de l'ensemble ainsi que selon la direction longitudinale, ladite attache avant centrale comprenant de préférence un pion de cisaillement.

Chaque première portion de raccord comporte une semelle s'étendant sensiblement parallèlement à une bordure latérale dudit au moins un organe de fixation associé, ladite semelle étant configurée de manière à bloquer en rotation ledit au moins un organe de fixation en cas de défaillance survenant sur ladite attache avant centrale.

L'ensemble comprend au moins un système et/ou équipement agencé dans une zone bord d'attaque de l'aile, à l'avant des attaches avant latérales.

Chacune des attaches avant latérales est conçue de façon à permettre la reprise des efforts s'exerçant selon une direction verticale de l'ensemble.

Lesdits moyens de fixation comprennent également une attache arrière fixée sur une nervure de fermeture arrière du caisson de mât, et l'attache arrière est de préférence conçue de façon à permettre la reprise des efforts s'exerçant selon une direction verticale de l'ensemble ainsi que selon une direction transversale de l'ensemble.

Lesdits moyens de fixation forment un système isostatique de reprise d'efforts.

Enfin, l'invention a également pour objet un aéronef comprenant au moins un tel ensemble.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un aéronef comprenant un ensemble selon l'invention ;
- la figure 2 est une vue de côté agrandie, montrant l'ensemble de la figure 1 portant un moteur ;
- la figure 3 est une vue en perspective d'une partie de l'ensemble montré sur la figure 2 ;
- la figure 4 est une vue en coupe de l'ensemble montré sur la figure 3, selon la ligne de coupe IV-IV ; et
- la figure 5 est une vue de l'ensemble montré sur les figures précédentes, selon une direction orthogonale à la ferrure unique de voilure.

### EXPOSÉ DÉTAILLÉ DE MODES DE RÉALISATION PRÉFÉRÉS

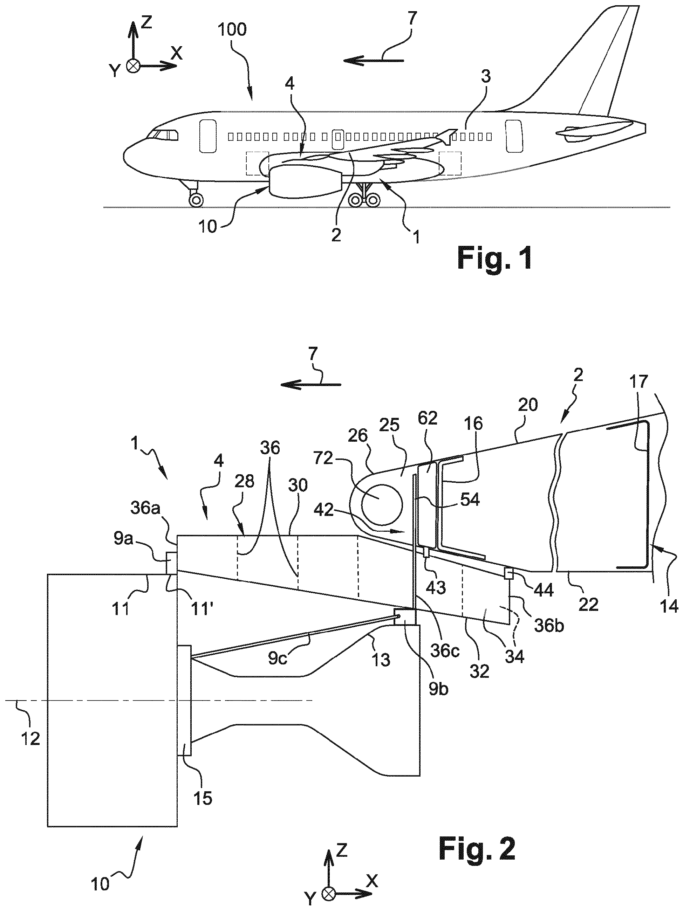

En référence à la figure 1, il est représenté un aéronef 100 comprenant un fuselage 3 sur lequel sont fixés deux ailes 2 (une seule visible sur la figure 1), chaque aile faisant partie intégrante d'un ensemble 1 selon l'invention. L'ensemble 1 supporte un moteur 10 à double flux et à double corps, tel qu'un turboréacteur à très haut taux de dilution, dit UHBR (de l'anglais « Ultra High Bypass Ratio »). L'ensemble 1 comprend non seulement l'aile 2, mais également un mât 4 d'accrochage du moteur 10 interposé entre l'aile 2 et ce moteur.

Dans toute la description qui va suivre, par convention, la direction X correspond à la direction longitudinale de l'ensemble 1 qui est également assimilable à la direction longitudinale du moteur 10, cette direction X étant parallèle à un axe longitudinal de ce moteur. D'autre part, la direction Y correspond à la direction orientée transversalement par rapport à l'ensemble 1, également assimilable à la direction transversale du moteur. Enfin, la direction Z correspond à la direction verticale ou de la hauteur, ces trois directions X, Y et Z étant orthogonales entre elles. Par conséquent, le moteur 10 est suspendu sous l'ensemble 1, dans la direction Z.

D'autre part, les termes « avant » et « arrière » sont à considérer par rapport à une direction d'avancement de l'aéronef rencontrée suite à la poussée exercée par les moteurs 10, cette direction étant représentée schématiquement par la flèche 7.

En référence à présent à la figure 2, il est représenté l'ensemble 1 sous lequel est suspendu le moteur 10, d'axe longitudinal 12. L'aile 2 de cet ensemble 1 présente une conception classique en ce sens qu'elle comporte un caisson de voilure 14 s'étendant selon une direction d'envergure de l'aile. Le caisson de voilure 14 est formé par un longeron avant 16, un longeron arrière ou intermédiaire 17, une peau supérieure d'extrados 20 ainsi qu'une peau inférieure d'intrados 22. Les deux longerons 16, 17 sont de préférence sensiblement parallèles, s'étendant selon la direction d'envergure et espacés les uns des autres selon une direction de la corde de l'aile. Des nervures intérieures de renfort sensiblement longitudinales (non représentées) peuvent être logées à l'intérieur du caisson de voilure 14, en étant fixés à chacun des quatre éléments de caisson 16, 17, 20, 22, par rivets, boulons ou éléments similaires. En outre, à l'avant du caisson de voilure 14, l'aile 2 comporte un capotage 26 formant le bord d'attaque de l'aile, et définissant avec le longeron avant 16 une zone de bord d'attaque 25.

L'autre élément de l'ensemble 1, le mât d'accrochage 4, comprend une structure primaire 28 en forme de caisson. Les autres éléments constitutifs non-représentés de ce mât 4, du type structure secondaire assurant la ségrégation et le maintien des systèmes tout en supportant des carénages aérodynamiques, sont des éléments classiques similaires à ceux rencontrés dans l'art antérieur. Par conséquent, il n'en sera fait aucune description détaillée.

La structure primaire 28, ou structure rigide, permet la transmission au caisson de voilure 14 des efforts statiques et dynamiques engendrés par le moteur 10. Le caisson formé par cette structure primaire 28 s'étend sur toute la longueur de cette structure primaire, selon la direction X. Il présente une conception classique, à savoir qu'il est délimité vers le haut par un longeron supérieur 30, vers le bas par un longeron inférieur 32, et latéralement par des panneaux latéraux 34 (un seul visible sur la figure 2). Comme cela est visible sur la figure 2, le longeron supérieur 30 se situe au moins en partie sous le caisson de voilure 14. A cet égard, il est noté que chacun des éléments précités 30, 32, 34 peut être réalisé d'une seule pièce, ou par l'assemblage de plusieurs pièces distinctes. De plus, une même pièce peut constituer tout ou partie de plusieurs de ces éléments 30, 32, 34.

Le caisson de mât 28 est équipé de nervures transversales de renfort, pour certaines agencées sensiblement dans des plans YZ et réparties selon la direction X. Il s'agit de nervures transversales intérieures 36, d'une nervure transversale de renfort 36b fermant l'arrière du caisson de mât 28, dite nervure de fermeture arrière, ainsi que d'une nervure transversale de renfort 36a fermant l'avant du caisson, dite nervure de fermeture avant. Les nervures 36, 36a, 36b relient entre eux les éléments extérieurs du caisson 30, 32, 34. Une autre nervure transversale de renfort 36c spécifique à l'invention est présente à l'intérieur du caisson de mât. Cette nervure 36c fait partie intégrante de deux attaches avant latérales 42, et elle constitue un chemin d'effort vertical afin de drainer les efforts entre ces attaches avant de voilure et l'attache moteur arrière qui sera décrite ci-après. La nervure 36c s'étend de préférence dans un plan P' sensiblement parallèle à celui du longeron avant de voilure 16, et plus particulièrement le plan défini par sa face avant.

Le caisson de mât 28 présente une section transversale YZ en forme générale de carrée, de rectangle ou de parallélogramme. La section transversale est évolutive le long de la direction X, mais elle reste néanmoins de forme continue tout le long du caisson de mât 28, ce qui permet un meilleur drainage des efforts au sein de ce caisson. En d'autres termes, la section transversale ne subit pas de rupture brusque de forme le long du caisson de mât 28. De préférence, cette section transversale se rétrécit progressivement à partir d'une portion médiane du caisson, en allant vers l'avant et vers l'arrière. La nervure 36c se situe quant à elle au niveau de cette portion médiane, ou à l'arrière de celle-ci.

La fixation du moteur 10 sur le caisson de mât 28 s'effectue d'une manière conventionnelle, qui va à présent être brièvement détaillée. Il est prévu une attache moteur avant 9a, reliant la nervure de fermeture avant 36a à un carter de soufflante 11 du moteur, ou bien à une virole extérieure 11' de carter intermédiaire. Il est également prévu une attache moteur arrière 9b reliant un carter d'éjection des gaz 13 du moteur, à une partie basse du caisson de mât 28. De préférence, le corps de l'attache moteur arrière 9b est fixé sur le longeron inférieur 32 et positionné proche d'une extrémité basse de la nervure transversale intérieure de renfort 36c, pour favoriser un chemin d'efforts plus direct entre le moteur et l'aile. De plus, les deux attaches moteur 9a, 9b sont complétées par deux bielles classiques de reprise des efforts de poussée 9c, qui relient une base 15 du carter intermédiaire au corps de l'attache moteur arrière 9b.

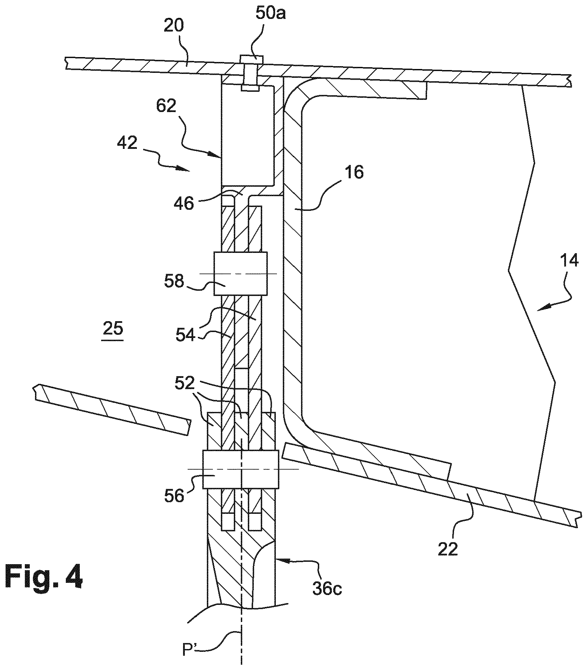

Ces attaches moteur 9a, 9b, 9c sont réalisées de manière classique, connue de l'homme du métier. Elles forment ensemble un système isostatique de reprise d'efforts, tout comme les moyens de fixation du caisson de mât 28 sur le caisson de voilure 14, qui sont spécifiques à l'invention et qui vont maintenant être décrits en référence aux figures 2 à 5.

Ces moyens de fixation sont ici constitués par deux attaches avant latérales 42, une attache arrière 44, et une attache avant centrale 43.

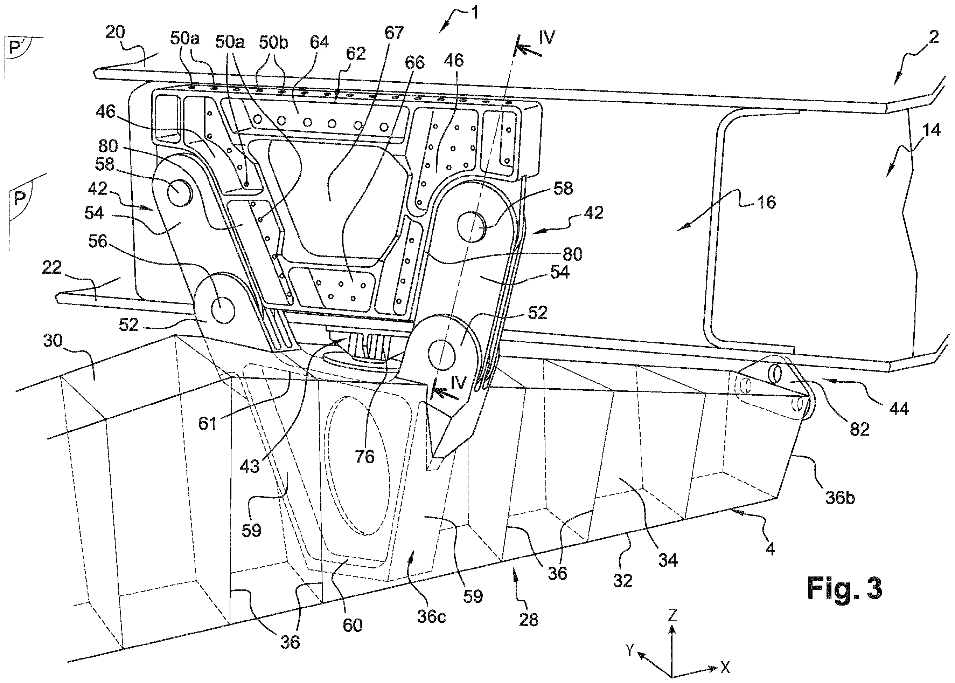

Les deux attaches avant latérales 42 sont de conception identique ou analogue, et agencées sensiblement symétriquement par rapport au plan P' précité, incliné par rapport à un plan médian XZ de l'ensemble 1, ce dernier plan étant référencé « P » sur la figure 3. De ce fait, seule l'une des deux attaches avant latérales 42 va à présent être décrite.

L'attache avant latérale 42, conçue pour assurer la reprise des efforts selon la direction Z, comporte tout d'abord une première portion de raccord 46. Celle-ci est fixée et plaquée contre le longeron avant 16 à l'aide de premiers moyens de fixation 50a, correspondant à des moyens conventionnels du type boulons, rivets ou éléments similaires. La première portion latérale 46 s'étend sur sensiblement toute la hauteur du longeron avant 16, de manière inclinée selon la direction Z. Elle prend la forme générale d'une poutre, dont les extrémités sont également fixées par les moyens de fixation 50a respectivement sur la peau supérieure d'extrados 20, et sur la peau inférieure d'intrados 22.

L'attache avant latérale 42 comporte également une seconde portion de raccord 52 faisant partie intégrante de la nervure 36c réalisée d'un seul tenant. Cette seconde portion de raccord 52 prend la forme d'une oreille, ou de plusieurs oreilles empilées et/ou espacées de manière à assurer une fonction de sécurité en cas de défaillance, cette fonction étant communément dénommée « Fail Safe ». Dans le mode de réalisation représenté, ce sont trois oreilles 52 qui sont espacées les unes des autres. Chaque oreille 52 fait saillie du caisson de mât 28 latéralement et vers le haut, de manière à ce qu'une portion d'extrémité de celle-ci soit logée dans la zone de bord d'attaque 25.

Pour relier les deux portions 46, 52, l'attache avant latérale 42 comprend au moins un organe de fixation sous forme de manille 54. Ici, ce sont deux manilles qui sont prévues de manière à satisfaire la fonction « Fail Safe », ces manilles s'étendant sensiblement parallèlement à la première portion de raccord 52, le long de celle-ci. Chaque manille 54 présente une extrémité basse agencée entre deux oreilles 52, et articulée sur celles-ci à l'aide d'un axe d'articulation 56 orienté sensiblement orthogonalement au plan P' défini par la face avant du longeron 16. Elle comporte aussi une extrémité haute articulée sur une oreille de la première portion de raccord 46, à l'aide d'un axe d'articulation 58 également orienté sensiblement orthogonalement au plan P'.

Comme cela ressort de ce qui précède, les oreilles 52 des deux attaches avant latérales 42 sont réalisées au sein d'une seule pièce, formée par la nervure intérieure 36c. Celle-ci comporte une semelle inférieure 60 fixée sur le longeron inférieur 32 du caisson de mât, ainsi que deux semelles latérales opposées 59 fixées respectivement sur les deux panneaux latéraux opposés 34. Les oreilles 52 se situent dans le prolongement des semelles latérales opposés 59 et des manilles 54, en étant interposées entre ces mêmes éléments 59, 54 sensiblement alignés. Enfin, la nervure 36c comporte une semelle supérieure 61 fixée sur le longeron supérieur 30, à l'intérieur du caisson de mât 28. Les deux attaches latérales 42 coopèrent ainsi de manière étroite grâce à la nervure intérieure 36c qu'elles partagent, de manière à permettre une reprise performante des efforts liés au moment de torsion s'exerçant autour de la direction X.

Alternativement, les oreilles 52 pourraient être réalisées indépendamment de la nervure 36c, et rapportées extérieurement sur le caisson de mât 28, au niveau des arêtes supérieures de ce caisson. Dans ce cas de figure, les oreilles 52 se situent également respectivement dans la continuité et l'alignement des deux semelles latérales opposées 59 de la nervure 36c, située à l'intérieur du caisson de mât 28 à la façon des autres nervures 36.

Une coopération analogue est avantageusement prévue en partie supérieure de ces attaches 42, puisque l'une des particularités de l'invention réside dans le fait que les deux premières portions de raccord 46 sont réalisées d'un seul tenant au sein d'une ferrure unique de voilure 62. Cette ferrure, qui s'étend sur sensiblement toute la hauteur du longeron avant 16, adopte de préférence une forme générale trapézoïdale, dont la grande base est agencée vers le haut. Cette grande base correspond à une portion supérieure de ferrure 64, qui relie les extrémités hautes des deux premières portions de raccord 46. De même, une petite base correspond à une portion inférieure de ferrure 66, qui relie les extrémités basses des deux premières portions de raccord 46. Les bases du trapèze sont sensiblement parallèles aux peaux 20, 22, tandis que les côtés du trapèze sont sensiblement parallèles et dans la continuité des manilles 54.

La portion supérieure de ferrure 64 est fixée par des seconds éléments de fixation 50b au longeron avant 16 de voilure ainsi qu'à la peau supérieure d'extrados 20, de même que la portion inférieure de ferrure 66 est fixée par des troisièmes éléments de fixation 50c au longeron avant 16, ainsi qu'à la peau inférieure d'intrados 22. Comme pour les premiers éléments de fixation 50a, les seconds et troisièmes éléments 50b, 50c sont des moyens conventionnels tels que des boulons ou des rivets, de façon à réaliser des éclissages. Les parties des peaux 20, 22, situées à l'avant du longeron 16, et traversées par les éléments de fixation 50a, 50b, 50c, correspondent à des extrémités structurales arrière du capotage de bord d'attaque 26.

La ferrure unique de voilure 62 peut ainsi présenter une épaisseur réduite dans la direction X, tout en offrant une forte capacité de transfert d'efforts, en particulier pour la reprise du moment de torsion selon cette même direction X. En effet, les efforts transitant par les deux attaches avant latérales 42 peuvent se rejoindre au sein de la ferrure 62, et circuler le long d'une ligne fictive fermée 68 longeant les deux premières portions de raccord 46 ainsi que les portions inférieure et supérieure de ferrure 64, 66. Cette ligne fermée 68, de forme également sensiblement trapézoïdale et le long de laquelle se succèdent les éléments de fixation 50a, 50b, 50c, se trouve agencée autour d'un ajour 67 de la ferrure 62. Cet ajour ou ouverture 67 est défini par les portions 46, 64, 66.

De plus, comme la ferrure unique 62 s'étend sur sensiblement toute la hauteur du longeron avant 16 selon la direction Z, les éléments de fixation 50a, 50b, 50c peuvent être répartis sur une large surface du longeron avant 16 ainsi que dans les peaux d'intrados et d'extrados 22, 20. Le chargement au niveau de chaque élément de fixation est ainsi réduit, ce qui contribue également à diminuer l'encombrement de la ferrure unique selon la direction X.

Par ailleurs, le fait de limiter l'épaisseur de la ferrure unique 62 permet de réduire le déport d'introduction d'efforts dans le longeron avant 16. Cela contribue à pouvoir réduire encore davantage l'épaisseur de cette ferrure, puisque celle-ci ne nécessite plus de dimensionnement spécifique pour résister aux effets dits de porte-à-faux, susceptibles d'introduire un moment de flexion dans la ferrure 62 et dans le longeron avant de voilure 16.

Ces mesures visent à aligner l'ensemble des éléments constituant les attaches avant 42 dans des plans successifs sensiblement parallèles au plan P'. Elles assurent une conception compacte selon la direction X, permettant de ménager un volume conséquent à l'avant des attaches avant latérales 42, dans la zone de bord d'attaque 25, pour l'implantation de systèmes et d'équipements 72 dont l'un est représenté schématiquement sur la figure 2. Il peut par exemple s'agir d'éléments de dégivrage, de conduits de carburant, de conduites de commande hydraulique, ou encore d'organes d'actionnement de volet mobile de bord d'attaque.

Enfin, il est noté qu'en raison de l'implantation des attaches avant latérales 42 dans la zone de bord d'attaque 25, l'encombrement global de l'ensemble 1 est réduit selon la direction Z. Cela permet à cet ensemble 1 de définir un caisson de mât 28 suffisamment haut selon la direction Z, afin de supporter des moteurs de diamètres élevés, tout en conservant une garde au sol satisfaisante.

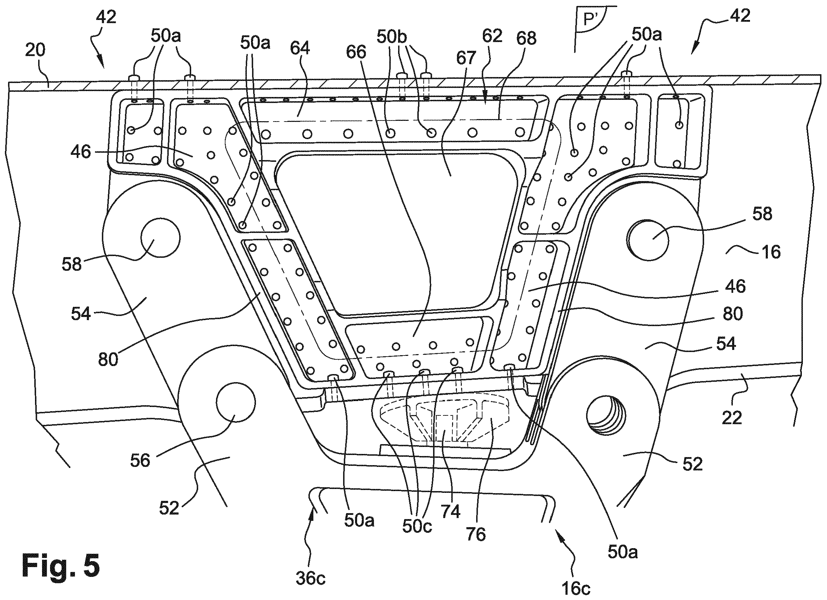

L'attache avant centrale 43 comporte un pion de cisaillement 74 représenté sur la figure 5, ce pion étant orienté selon la direction Z et solidaire d'une ferrure rapportée sur le caisson de mât, au droit de la nervure 36c. Le pion 74 coopère avec une ferrure 76 solidaire de la ferrure unique 62, et rapportée sous la peau d'intrados 22.

L'attache avant centrale 43, de préférence agencée dans un même plan transversal que les deux attaches avant latérales 42, est conçue pour assurer la reprise des efforts dits de cisaillement, s'exerçant selon les directions Y et X. Cette reprise s'effectue proche ou dans un plan défini par la peau inférieure d'intrados.

En cas de défaillance de cette attache avant 43, les efforts selon la direction Y peuvent être repris par les deux attaches avant latérales 42, grâce aux manilles 54. En effet, au sein de la ferrure unique 62, chaque première portion de raccord 46 comporte une semelle 80 s'étendant sensiblement parallèlement aux bordures latérales des manilles associées 54, seul un faible jeu subsistant entre ces éléments 54, 80. Ainsi, en cas de défaillance de l'attache avant centrale 43, la semelle 80 est configurée de manière à pouvoir bloquer en rotation les manilles 54 selon l'axe 58 qui les relie à la ferrure 62. Ce blocage en rotation permet ainsi d'assurer la fonction « Fail Safe » concernant la reprise des efforts selon la direction Y.

Enfin, l'attache arrière 44 présente une conception conventionnelle en étant pourvue d'une manille triangulaire 82, coopérant avec la nervure de fermeture arrière 36b du caisson de mât 28. Elle est conçue pour assurer la reprise des efforts selon les directions Y et Z, ce qui permet aux attaches 42, 43, 44 de former un système isostatique de reprise d'efforts.

Bien entendu, diverses modifications peuvent être apportées par l'homme du métier à l'invention qui vient d'être décrite, uniquement à titre d'exemples non limitatifs, et dont la portée est définie par les revendications annexées.

## Revendications

1. Ensemble (1) pour aéronef comprenant :
- une aile d'aéronef (2) comprenant un caisson de voilure (14) formé en partie à l'aide d'un longeron avant de voilure (16), d'une peau supérieure d'extrados (20) et d'une peau inférieure d'intrados (22) ;
- un mât (4) d'accrochage de moteur agencé sous l'aile (2), le mât comprenant une structure primaire en forme de caisson de mât (28) présentant un longeron supérieur (30) s'étendant au moins en partie sous le caisson de voilure (14), et
- des moyens de fixation (42, 43, 44) de la structure primaire (28) du mât d'accrochage sur le caisson de voilure (14),
lesdits moyens de fixation comprenant deux attaches avant latérales (42), chacune de ces attaches comportant :
- une première portion de raccord (46) fixée sur le longeron avant de voilure (16) à l'aide de premiers éléments de fixation (50a) ;
- une seconde portion de raccord (52) solidaire de la structure primaire (28) du mât d'accrochage ;
- au moins un organe de fixation (54) articulé sur chacune des première et seconde portions de raccord (46, 52) selon des axes d'articulation (56, 58) sensiblement orthogonaux à un plan (P') du longeron avant de voilure (16),
**caractérisé en ce que** les premières portions de raccord (46) des deux attaches avant latérales (42) sont réalisées d'un seul tenant au sein d'une ferrure unique de voilure (62) s'étendant sur sensiblement toute la hauteur du longeron avant de voilure (16), la ferrure unique de voilure (62) comportant également une portion supérieure de ferrure (64) ainsi qu'une portion inférieure de ferrure (66) reliant chacune les deux premières portions de raccord (46), ladite portion supérieure de ferrure (64) étant fixée par des seconds éléments de fixation (50b) au longeron avant de voilure (16) ainsi qu'à la peau supérieure d'extrados (20), et la portion inférieure de ferrure (66) étant fixée par des troisièmes éléments de fixation (50c) au longeron avant de voilure (16) ainsi qu'à la peau inférieure d'intrados (22).

2. Ensemble selon la revendication 1, **caractérisé en ce que** ladite ferrure unique de voilure (62) définit un ajour (67) autour duquel sont agencées les deux premières portions de raccord (46) ainsi que les portions inférieure et supérieure de ferrure (66, 64).

3. Ensemble selon la revendication 1 ou la revendication 2, **caractérisé en ce que** ladite ferrure unique de voilure (62) présente une forme générale trapézoïdale, dont la grande base est agencée vers le haut.

4. Ensemble selon l'une quelconque des revendications précédentes, **caractérisé en ce que** les deux secondes portions de raccord (52) sont réalisées d'un seul tenant au sein d'une nervure transversale intérieure de renfort (36c) du caisson de mât (28), les deux secondes portions de raccord (52) faisant saillie extérieurement de ce caisson de mât et pénétrant de préférence en partie dans une zone de bord d'attaque (25) de l'aile.

5. Ensemble selon l'une quelconque des revendications précédentes, **caractérisé en ce que** ledit au moins un organe de fixation est formé par au moins une manille (54), s'étendant de préférence sensiblement parallèlement à sa première portion de raccord associée (46).

6. Ensemble selon l'une quelconque des revendications précédentes, **caractérisé en ce que** lesdits moyens de fixation comprennent également une attache avant centrale (43) configurée pour assurer la reprise des efforts s'exerçant selon une direction transversale (Y) de l'ensemble ainsi que selon la direction longitudinale (X), ladite attache avant centrale (43) comprenant de préférence un pion de cisaillement (74).

7. Ensemble selon la revendication précédente, **caractérisé en ce que** chaque première portion de raccord (46) comporte une semelle (80) s'étendant sensiblement parallèlement à une bordure latérale dudit au moins un organe de fixation associé (54), ladite semelle (80) étant configurée de manière à bloquer en rotation ledit au moins un organe de fixation (54) en cas de défaillance survenant sur ladite attache avant centrale (43).

8. Ensemble selon l'une quelconque des revendications précédentes, **caractérisé en ce qu'**il comprend au moins un système et/ou équipement (72) agencé dans une zone bord d'attaque (25) de l'aile, à l'avant des attaches avant latérales (42).

9. Ensemble selon l'une quelconque des revendications précédentes, **caractérisé en ce que** chacune des attaches avant latérales (42) est conçue de façon à permettre la reprise des efforts s'exerçant selon une direction verticale (Z) de l'ensemble.

10. Ensemble selon l'une quelconque des revendications précédentes, **caractérisé en ce que** lesdits moyens de fixation comprennent également une attache arrière (44) fixée sur une nervure de fermeture arrière (36b) du caisson de mât (28), et **en ce que** l'attache arrière (44) est de préférence conçue de façon à permettre la reprise des efforts s'exerçant selon une direction verticale (Z) de l'ensemble ainsi que selon une direction transversale (Y) de l'ensemble.

11. Ensemble selon l'une quelconque des revendications précédentes, **caractérisé en ce que** lesdits moyens de fixation forment un système isostatique de reprise d'efforts.

12. Aéronef (100) comprenant au moins un ensemble (1) selon l'une quelconque des revendications précédentes.

## Patentansprüche

1. Anordnung (1) für ein Luftfahrzeug, welche umfasst:
- eine Luftfahrzeugtragfläche (2), die einen Flügelkasten (14) umfasst, der zum Teil von einem vorderen Flügelholm (16), einer oberen druckseitigen Haut (20) und einer unteren saugseitigen Haut (22) gebildet wird;
- eine Aufhängungsstruktur (4) für ein Triebwerk, die unter der Tragfläche (2) angeordnet ist, wobei die Struktur eine primäre Struktur in Form eines Pylonkastens (28) umfasst, der einen oberen Holm (30) aufweist, der sich wenigstens teilweise unter dem Flügelkasten (14) erstreckt, und
- Mittel zur Befestigung (42, 43, 44) der primären Struktur (28) der Aufhängungsstruktur an dem Flügelkasten (14),
wobei diese Befestigungsmittel zwei seitliche vordere Verbindungsstücke (42) umfassen, wobei jedes dieser Verbindungsstücke aufweist:
- einen ersten Anschlussabschnitt (46), der am vorderen Flügelholm (16) mithilfe erster Befestigungselemente (50a) befestigt ist;
- einen zweiten Anschlussabschnitt (52), der mit der primären Struktur (28) der Aufhängungsstruktur fest verbunden ist;
- wenigstens ein Befestigungsorgan (54), das mit dem ersten und dem zweiten Anschlussabschnitt (46, 52) über jeweilige Gelenkbolzen (56, 58), die zu einer Ebene (P') des vorderen Flügelholms (16) im Wesentlichen orthogonal sind, gelenkig verbunden ist,
**dadurch gekennzeichnet, dass** die ersten Anschlussabschnitte (46) der zwei seitlichen vorderen Verbindungsstücke (42) aus einem Stück innerhalb eines einzigen Tragflächenbeschlags (62) hergestellt sind, der sich im Wesentlichen über die gesamte Höhe des vorderen Flügelholms (16) erstreckt, wobei der einzige Tragflächenbeschlag (62) außerdem einen oberen Beschlagabschnitt (64) sowie einen unteren Beschlagabschnitt (66) aufweist, die jeweils die zwei ersten Anschlussabschnitte (46) verbinden, wobei der obere Beschlagabschnitt (64) durch zweite Befestigungselemente (50b) am vorderen Flügelholm (16) sowie an der oberen druckseitigen Haut (20) befestigt ist und der untere Beschlagabschnitt (66) durch dritte Befestigungselemente (50c) am vorderen Flügelholm (16) sowie an der unteren saugseitigen Haut (22) befestigt ist.

2. Anordnung nach Anspruch 1, **dadurch gekennzeichnet, dass** der einzige Tragflächenbeschlag (62) einen Ausschnitt (67) definiert, um den herum die beiden ersten Anschlussabschnitte (46) sowie der untere und der obere Beschlagabschnitt (66, 64) angeordnet sind.

3. Anordnung nach Anspruch 1 oder Anspruch 2, **dadurch gekennzeichnet, dass** der einzige Tragflächenbeschlag (62) eine trapezförmige allgemeine Form aufweist, deren große Grundseite oben angeordnet ist.

4. Anordnung nach einem der vorhergehenden Ansprüche, **dadurch gekennzeichnet, dass** die beiden zweiten Anschlussabschnitte (52) aus einem Stück innerhalb einer unteren, quer verlaufenden Verstärkungsrippe (36c) des Pylonkastens (28) hergestellt sind, wobei die beiden zweiten Anschlussabschnitte (52) von diesem Pylonkasten aus nach außen vorstehen und vorzugsweise zum Teil in einen Vorderkantenbereich (25) der Tragfläche eindringen.

5. Anordnung nach einem der vorhergehenden Ansprüche, **dadurch gekennzeichnet, dass** das wenigstens eine Befestigungsorgan von wenigstens einem Bügel (54) gebildet wird, der sich vorzugsweise im Wesentlichen parallel zu seinem zugeordneten ersten Anschlussabschnitt (46) erstreckt.

6. Anordnung nach einem der vorhergehenden Ansprüche, **dadurch gekennzeichnet, dass** die Befestigungsmittel außerdem ein mittleres vorderes Verbindungsstück (43) umfassen, das dafür ausgebildet ist, die Aufnahme der Kräfte sicherzustellen, die in einer Querrichtung (Y) der Anordnung sowie in der Längsrichtung (X) ausgeübt werden, wobei das mittlere vordere Verbindungsstück (43) vorzugsweise einen Scherbolzen (74) umfasst.

7. Anordnung nach dem vorhergehenden Anspruch, **dadurch gekennzeichnet, dass** jeder Anschlussabschnitt (46) eine Sohle (80) aufweist, die sich im Wesentlichen parallel zu einem seitlichen Rand des wenigstens einen zugeordneten Befestigungsorgans (54) erstreckt, wobei die Sohle (80) derart ausgebildet ist, dass sie das wenigstens eine Befestigungsorgan (54) im Falle eines an dem mittleren vorderen Verbindungsstück (43) eintretenden Ausfalls gegen Verdrehen sichert.

8. Anordnung nach einem der vorhergehenden Ansprüche, **dadurch gekennzeichnet, dass** sie wenigstens ein System und/oder eine Einrichtung (72) umfasst, das/die in einem Vorderkantenbereich (25) der Tragfläche angeordnet ist, vorn an den seitlichen vorderen Verbindungsstücken (42).

9. Anordnung nach einem der vorhergehenden Ansprüche, **dadurch gekennzeichnet, dass** jedes der seitlichen vorderen Verbindungsstücke (42) so ausgebildet ist, dass es die Aufnahme der Kräfte ermöglicht, die in einer vertikalen Richtung (Z) der Anordnung ausgeübt werden.

10. Anordnung nach einem der vorhergehenden Ansprüche, **dadurch gekennzeichnet, dass** die Befestigungsmittel außerdem ein hinteres Verbindungsstück (44) umfassen, das an einer hinteren Verschlussrippe (36b) des Pylonkastens (28) befestigt ist, und dadurch, dass das hintere Verbindungsstück (44) vorzugsweise so ausgebildet ist, dass es die Aufnahme der Kräfte ermöglicht, die in einer vertikalen Richtung (Z) der Anordnung sowie in einer Querrichtung (Y) der Anordnung ausgeübt werden.

11. Anordnung nach einem der vorhergehenden Ansprüche, **dadurch gekennzeichnet, dass** die Befestigungsmittel ein isostatisches Kraftaufnahmesystem bilden.

12. Luftfahrzeug (100), welches wenigstens eine Anordnung (1) nach einem der vorhergehenden Ansprüche umfasst.

## Claims

1. An assembly (1) for an aircraft comprising:
- an aircraft wing (2) comprising a wing box (14) formed in part with the aid of a front wing spar (16), of an upper suction-side skin (20) and a lower pressure-side skin (22);
- an engine attachment pylon (4) arranged under the wing (2), the pylon comprising a primary structure in the form of a pylon box (28) having an upper spar (30) extending at least in part under the wing box (14), and
- means (42, 43, 44) for securing the primary structure (28) of the attachment pylon to the wing box (14),
said securing means comprising two lateral front fittings (42), each of these fittings comprising:
- a first connecting portion (46) secured to the front wing spar (16) with the aid of first securing elements (50a);
- a second connecting portion (52) secured to the primary structure (28) of the attachment pylon;
- at least one securing member (54) articulated to each of the first and second connecting portions (46, 52) about articulation pins (56, 58) substantially orthogonal to a plane (P') of the front wing spar (16),
haracterized in that the first connecting portions (46) of the two lateral front fittings (42) are made in one piece in a single wing connector (62) extending over essentially the entire height of the front wing spar (16), the single wing connector (62) also comprising an upper connector portion (64) and a lower connector portion (66) that each connect the two first connecting portions (46), said upper connector portion (64) being secured by second securing elements (50b) to the front wing spar (16) and to the upper suction-side skin (20), and the lower connector portion (66) being secured by third securing elements (50c) to the front wing spar (16) and to the lower pressure-side skin (22).

2. The assembly as claimed in claim 1, wherein said single wing connector (62) defines an opening (67) around which the two first connecting portions (46) and the lower and upper connector portions (66, 64) are arranged.

3. The assembly as claimed in claim 1, wherein said single wing connector (62) has a trapezoidal overall shape, the large base of which is arranged uppermost.

4. The assembly as claimed in claim 1, wherein the two second connecting portions (52) are made in one piece in an interior transverse reinforcing rib (36c) of the pylon box (28), the two second connecting portions (52) projecting out of this pylon box and penetrating preferably in part into a leading edge region (25) of the wing.

5. The assembly as claimed in claim 1, wherein said at least one securing member is formed by at least one shackle (54) extending preferably substantially parallel to its associated first connecting portion (46).

6. The assembly as claimed in claim 1, wherein said securing means also comprise a central front fitting (43) configured to react load exerted in a transverse direction (Y) of the assembly and in the longitudinal direction (X), said central front fitting (43) comprising preferably a shear pin (74).

7. The assembly as claimed in the preceding claim, wherein each first connecting portion (46) comprises a sole (80) extending substantially parallel to a lateral edge of said at least one associated securing member (54), said sole (80) being configured to prevent said at least one securing member (54) from rotating in the event of failure occurring at said central front fitting (43).

8. The assembly as claimed in claim 1, which comprises at least one system and/or piece of equipment (72) arranged in a leading edge region (25) of the wing, in front of the lateral front fittings (42).

9. The assembly as claimed in claim 1, wherein each of the lateral front fittings (42) is designed to allow load exerted in a vertical direction (Z) of the assembly to be reacted.

10. The assembly as claimed in claim 1, wherein said securing means also comprise a rear fitting (44) secured to a rear closing rib (36b) of the pylon box (28), and wherein the rear fitting (44) is preferably designed so as to allow load exerted in a vertical direction (Z) of the assembly and in a transverse direction (Y) of the assembly to be reacted.

11. The assembly as claimed in claim 1, wherein said securing means form a statically determinate load-reacting system.

12. An aircraft (100) comprising at least one assembly (1) as claimed in claim 1.
